# EUROPÄISCHE PATENTSCHRIFT

(11) **EP 0 750 966 B1**
(45) Veröffentlichungstag und Bekanntmachung des Hinweises auf die Patenterteilung: **08.01.1997**
(21) Anmeldenummer: 95117781.5
(22) Anmeldetag: 11.11.1995
(51) Int. Cl.: B23Q 11/00, B65G 53/30

(54) **Sammelbehälter mit Transportpumpe**
Collection container with pump
Récipient collecteur avec pompe

(30) Priorität: 29.06.1995 DE 29510514 U
(43) Veröffentlichungstag der Anmeldung: 02.01.1997
(73) Patentinhaber: Alpirsbacher Maschinenbau GmbH & Co. KG, 72275 Alpirsbach (DE)
(72) Erfinder: Binder, Bruno, D-72175 Dornhan (DE); Riegert, Wolfgang, D-72275 Alpirsbach (DE); Riegert, Klaus, D-72275 Alpirsbach (DE)
(74) Vertreter: Klocke, Peter, Dipl.-Ing.

(56) Entgegenhaltungen:
- EP-A- 0 269 124
- EP-A- 0 518 095
- FR-A- 1 316 322
- FR-A- 2 176 618
- PATENT ABSTRACTS OF JAPAN vol. 18, no. 575 (C-1268), 4.November 1994 & JP-A-06 210198 (ENOMOTO KOGYO), 2.August 1994,

## Beschreibung

Die vorliegende Erfindung betrifft einen Sammelbehälter mit Transportpumpe zur Förderung von flüssigen Medien mit Produktionsrückständen, wie z. B. Späne, Kühl- und Schmiermittel gemäß dem Oberbegriff des Anspruchs 1.

Bearbeitungsrückstände, wie sie z. B. in der spanenen Industrie anfallen, müssen zusammen mit dem dort verwendeten Kühl- oder Schmiermittel von der Maschine abtransportiert werden, um an einer anderen Stelle die Trennung der Späne von dem flüssigen Medium durchzuführen. Dazu wird das Gemisch durch Rohrleitungen gepumpt oder gesaugt.

Bei den bisher bekannten Anlagen werden die zerkleinerten Späne, wie z. B. in der EP 518 095, in einem Auffangbehälter mit geringer Neigung gesammelt, so daß die Späne durch die Strömung des Mediums zu der am tiefsten Punkt angeordneten Pumpe befördert werden. Eine andere bekannte Variante stellt einen trichterförmigen Behälter mit relativ steilen Wänden dar, so daß die Späne durch die Schwerkraft zu der am tiefsten Punkt angeordneten Pumpe gelangen. Nachteilig hat sich bei den bekannten Auffangbehältern herausgestellt, daß entweder der Spänetransport nur bei geringen Zulaufvolumenströmen funktioniert oder die Behälter eine zu große Bauhöhe aufweisen.

Aus der EP 0 269 124 ist ein hochkonsistenter Stoffturm bekannt, der die Merkmale des Oberbegriffs des Hauptanspruchs aufweist. Bei dieser Vorrichtung sind an den in radialer Richtung sich erstreckenden Räumerarmen Schabplatten angeordnet, die das mit unterhalb des Behälterbodens angeordneten Pumpen abzutransportierende Material auf einer Kreislinie um den Mittelpunkt des kreiszylindrischen Sammelbehälters zusammenführen. Bei dieser bekannten Vorrichtung besteht aufgrund der Ausgestaltung des Räumerarms die Gefahr, daß sich größere Partikel unter dem Schaber verklemmen. Darüber hinaus ist durch die Anordnung der Pumpen unterhalb des Sammelbehälterbodens eine große Bauhöhe erforderlich.

Die FR-A-2 176 618 offenbart eine Einrichtung zum Dosieren von Granulat, bei der in einem zylindrischen Sammelbehälter Räumerarme angeordnet sind, die das auf dem Behälterboden liegende Material zu am Außenumfang angeordneten Öffnungen führt. Die Räumerarme weisen einen inneren Räumerarmabschnitt mit einer gebogenen Transportfläche und einen äußeren Räumerarmabschnitt mit einer geraden Transportfläche auf.

Die JP-A-62 10 198 offenbart eine Einrichtung zum Absaugen von Kühlmittel, das mit Schneidspänen versetzt ist, aus einem Sammelbehälter. Hierzu wird ein Absaugrohr, das mit einem entsprechenden Abscheider zur Trennung des Kühlmittels von den Spänen am anderen Ende verbunden ist, in den Sammelbehälter getaucht. Zusätzlich ist eine entsprechende Vakuumsaugeinrichtung vorgesehen.

Der vorliegenden Erfindung liegt die Aufgabe zugrunde, eine Vorrichtung vorzuschlagen, die eine geringe Bauhöhe aufweist und trotzdem einen optimalen Abtransport der Späne mittels der Transportpumpe gewährleistet.

Diese Aufgabe wird erfindungsgemäß durch einen Sammelbehälter mit den Merkmalen des Hauptanspruchs gelöst. Weitere vorteilhafte Ausgestaltungen sind den Unteransprüchen zu entnehmen.

Der erfindungsgemäß ausgestaltete Sammelbehälter ist als zylindrischer Topf mit einem im wesentlichen ebenen Behälterboden ausgebildet und weist einen über den Behälterboden laufenden Räumer auf, der die auf dem Behälterboden abgelagerten Späne zu der Transportpumpe führt. Ein derart ausgestalteter Sammelbehälter ist in seiner Bauhöhe reduziert, und wird im wesentlichen nur noch durch das Volumen bestimmt, das in einer bestimmten Zeiteinheit anfällt und weitertransportiert werden muß. Die Bearbeitungsrückstände können dem Sammelbehälter an jeder beliebigen Stelle zugegeben werden. Gleiches gilt für das Trägermedium. Der Behälterboden ist eben damit der Räumer, der parallel zu der Oberfläche des Behälterbodens über diesen läuft, die Späne an einem Punkt zusammenführen kann, an dem die Transportpumpe angeordnet ist. Zur Unterstützung kann der Behälterboden bei entsprechender Ausgestaltung des Räumers auch eine leichte Neigung aufweisen. Die Transportpumpe ist außermittig des Sammelbehälters angeordnet. Bei dieser Ausgestaltung ist es besonders vorteilhaft, daß die Transportpumpe nicht unterhalb des Behälterbodens angeordnet werden muß, was leicht zu einer Verstopfung führen kann, weil das Span/Flüssigkeitsverhältnis ungünstig wird. Die Transportpumpe ist oberhalb des Behälterbodens angeordnet, um die aufgewirbelten Späne zusammen mit der Flüssigkeit abzusaugen und über die angeschlossene Rohrleitung weiterzutransportieren. Eine Verstopfung der Transportpumpe kann dadurch weitgehend vermieden werden, da die Transportpumpe nur so viel absaugt, wie sie entsprechend ihrer Leistung absaugen kann.

Der Räumer weist mindestens einen Räumarm auf, der um die senkrechte Sammelbehälterachse rotiert. Die Anzahl der Räumarme richtet sich nach der Menge der anfallenden Späne und der zweckmäßigen Umdrehungsgeschwindigkeit. Der Räumarm weist einen inneren Räumarmabschnitt mit einer konvexen Transportfläche und einen äußeren Räumarmabschnitt mit einer konkaven Transportfläche auf. Durch die konkave Transportfläche werden die im äußeren Bereich des Behälterbodens liegenden Späne und durch die konvexe Transportfläche die im inneren Bereich des Behälterbodens angeordneten Späne nach innen zu dem in radialer Richtung verlaufenden Sammelabschnitt des Räumerarms geführt. Auch Abweichungen von dieser zu bevorzugenden Form sind z. B. durch Näherungsgeometrien (Annäherung von Geraden, Elipsen, Kreisen) möglich.

Der Räumarm konzentriert die Späne auf einer Kreislinie um den Mittelpunkt des Behälterbodens. Dies vereinfacht den Aufbau, da auch der Antrieb des Räumers im Zentrum anzuordnen ist.

Vorzugsweise weist der Räumarm in einer weiteren Ausbildung einen in radialer Richtung verlaufenden Sammelabschnitt auf, an dessen nach außen zeigenden Ende sich der äußere Räumarmabschnitt mit der konkaven Transportfläche und an dessen nach innen zeigenden Ende sich der innere Räumarmabschnitt mit der konvexen Transportfläche anschließt. Der Sammelabschnitt bewegt sich auf einer Kreislinie auf der auch die Transportpumpe angeordnet ist.

Der Räumarm weist vorteilhafterweise eine Transportfläche auf, die gegen die Radiallinie um einen Winkel α geneigt ist, um die Späne auf dem Behälterboden zu konzentrieren. Durch die besondere Ausgestaltung des Räumarms werden die Späne von jeder beliebigen Stelle des Behälterbodens zusammengeführt und konzentriert, so daß sie, wenn sie an der Transportpumpe vorbeigeführt werden, von dieser aufgesaugt werden können. Der Winkel α liegt zwischen 30° und 90°, vorzugsweise zwischen 60° und 65°. Wie vorstehend bereits angedeutet, stellt der Winkel α ein Maß für die Neigung der Transportfläche zu der Radiallinie dar. Je nach dem, ob es sich um eine konkave Transportfläche oder um eine konvexe Transportfläche handelt, ist die Abweichung von der Radiallinie in die eine oder andere Richtung. Dadurch werden die an der Transportfläche anliegenden Späne durch den Reibungskraftanteil des Kraftvektors in Förderrichtung geschoben. Die Reibungskraft zwischen Boden und Span sowie zwischen Transportfläche und Span steht der Zentrifugalkraft entgegen. Es hat sich daher gezeigt, daß die vorstehend angegebenen Winkel am zweckmäßigsten sind.

Die Drehzahl des Räumers beträgt 0,5 bis 50 Umdrehungen pro Minute, vorzugsweise 3 Umdrehungen pro Minute.

Die Höhe der Transportfläche richtet sich nach den Erfordernissen für eine optimale Arbeitsweise, wobei gemäß einer vorteilhaften Ausgestaltung die Höhe der Transportfläche ungefähr 10 mm beträgt.

Nachfolgend wird die Erfindung anhand eines Ausführungsbeispiels in Verbindung mit den begleitenden Zeichnungen näher erläutert.

Es stellen dar:
- Figur 1: eine schematische Schnittdarstellung durch den Sammelbehälter;
- Figur 2: eine Draufsicht auf den Sammelbehälter und
- Figur 3: eine vergrößerte Darstellung einiger Räumarme.

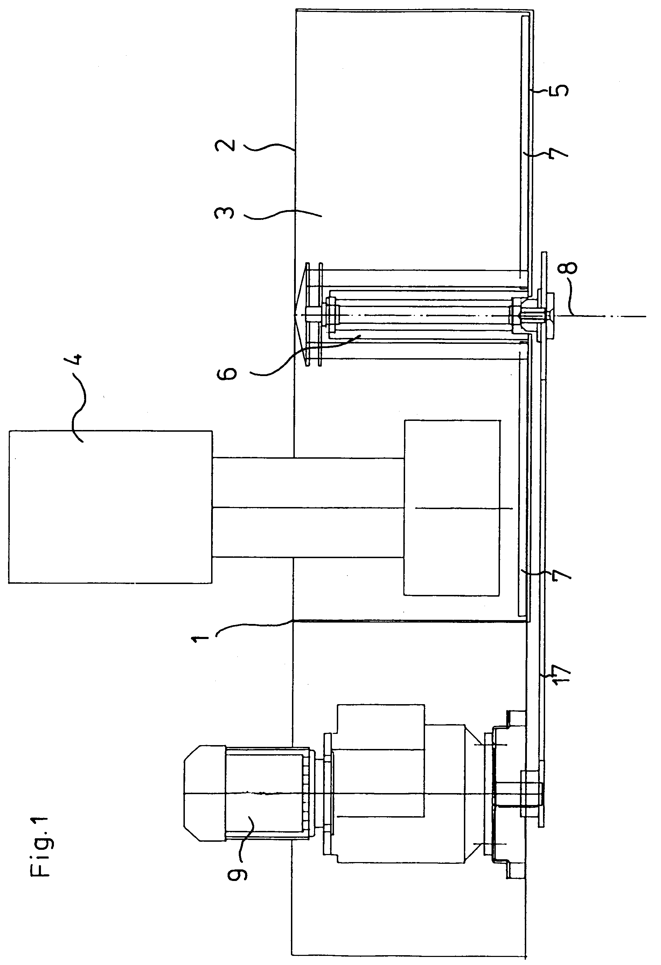

Figur 1 zeigt den Sammelbehälter 1 mit dem bis zur Behälteroberkante gebildeten Aufnahmeraum 3 für die Späne und das Kühl- bzw. Schmiermittel. In den zylindrischen Aufnahmeraum 3 ragt eine Transportpumpe 4, die mit Abstand zu dem Behälterboden 5 angeordnet ist. Die Transportpumpe 4 saugt die Metallspäne mit Medium vom Behälterboden 5 ab, die mittels des Räumers 6 in den Bereich der Ansaugöffnung der Transportpumpe 4 gelangen. Der Räumer 6 besteht in dem Ausführungsbeispiel aus sechs Räumarmen 7, die um die Sammelbehälterachse 8 rotieren. Der Antrieb des Räumers 6 erfolgt über einen Riemen 17 und eine seitlich angeordnete Antriebseinheit 9. Die Räumarme 7 liegen auf dem Behälterboden 5 auf, um die Späne zu erfassen und der Transportpumpe 4 zuzuführen. Damit die Räumarme 7 nicht mit dem Behälterboden 5 verklemmen können, weist der Räumer 6 ein Spiel auf, so daß ein Anheben des Räumers 6 bzw. Abheben der Räumarme 7 von dem Behälterboden 5 möglich ist.

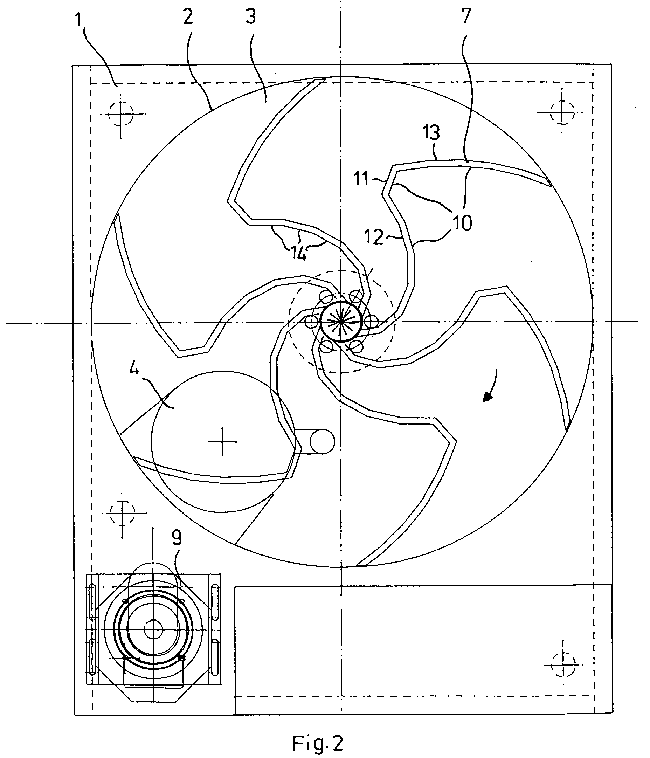

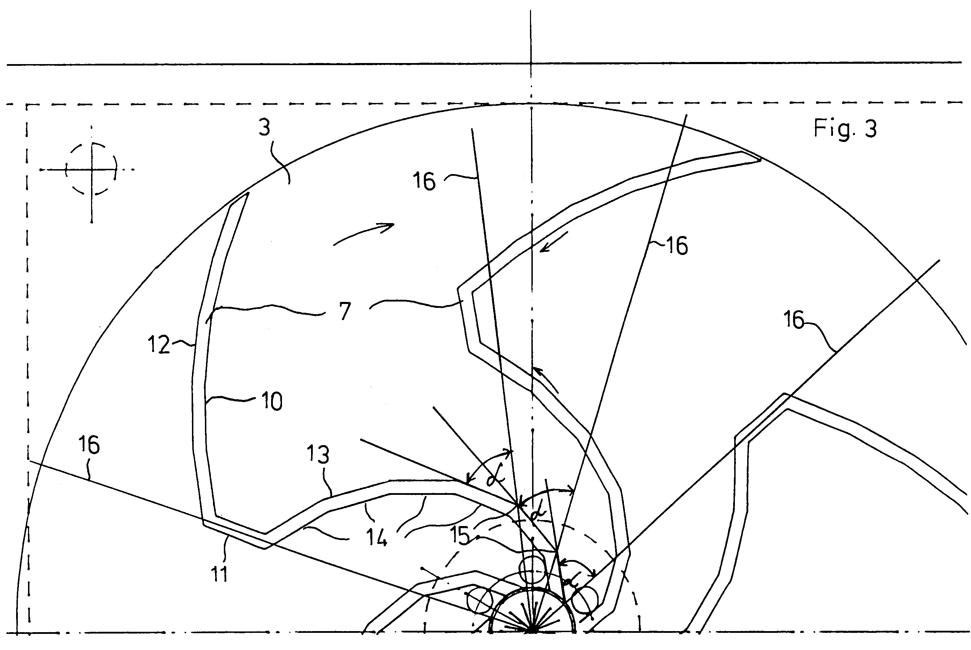

Figur 2 zeigt eine schematische Draufsicht auf den Sammelbehälter 1, aus der die Anordnung der Transportpumpe 4 in dem Aufnahmeraum 3 und die Ausgestaltung der Räumarme 7 ersichtlich ist. Die Räumarme 7 sind aus Metall hergestellt und weisen eine Höhe von ungefähr 10 mm auf. Die Transportfläche 10 jedes Räumarms mit der die Späne der Transportpumpe 4 zugeführt werden, weisen einen Sammelabschnitt 11 sowie daran angrenzend auf der Innenseite einen konvexen Abschnitt 12 und auf der Außenseite einen konkaven Abschnitt 13 mit entsprechend ausgestalteter Transportfläche auf. Diese Ausgestaltung bewirkt, daß sowohl im inneren Bereich angeordnete Späne als auch im äußeren Bereich angeordnete Späne, wie durch die Pfeile gekennzeichnet, zu dem Sammelabschnitt 11 geführt werden, der genau unter der Ansaugöffnung der Transportpumpe 4 vorbei läuft. Wie aus Figur 3 ersichtlich, liegt der Sammelabschnitt 11 auf der vom Mittelpunkt ausgehenden Radiallinie 16, während der konvexe Abschnitt 12 und der konkave Abschnitt 13 um einen Winkel α von der Radiallinie abweicht. Die Abschnitte 12 und 13 sind einer Bogenlinie angenähert, wobei die Konstruktion in der Weise erfolgt, daß beginnend vom Mittelpunkt Sammelbehälterachse) jedes einzelne Segment 14 um einen bestimmten Winkel α von der durch den Fußpunkt 15 laufenden Radiallinie 16 abweicht (vgl. Figur 3). In dem Ausführungsbeispiel liegt der Winkel α zwischen 60° und 65° und die Dreharme drehen sich mit drei Umdrehungen pro Minute.

Es hat sich gezeigt, daß mit dieser Konstruktion eine optimale Ausräumung der Späne ohne Verstopfen der Transportpumpe gewährleistet wird.

## Patentansprüche

1. Sammelbehälter mit Transportpumpe zur Förderung von flüssigen Medien mit Produktionsrückständen, z. B. Späne, Kühl- und Schmiermittel, wobei der Sammelbehälter (1) als zylindrischer Topf ausgebildet ist und einen um die senkrechte Sammelbehälterachse (8) rotierenden Räumer (6) mit mindestens einem Räumerarm (7), der die auf dem im wesentlichen ebenen Behälterboden befindlichen Späne auf einer Kreislinie um den Mittelpunkt des Behälterbodens (5) konzentriert und der Transportpumpe zuführt, **dadurch gekennzeichnet,** daß die Transportpumpe (4) in den Sammelbehälter (1) hineinragt und die Späne vom Behälterboden (5) nach oben wegsaugt, und der Räumerarm (7) auf dem Behälterboden aufliegt und einen inneren Räumerabschnitt (12) mit einer konvexen Transportfläche und einen äußeren Räumerarmabschnitt (13) mit einer konkaven Transportfläche aufweist.

2. Sammelbehälter nach Anspruch 1, **dadurch gekennzeichnet,** daß der Räumerarm (7) zwischen dem inneren Räumarmabschnitt (12) und dem äußeren Räumarmabschnitt (13) einen in radialer Richtung verlaufenden Sammelabschnitt (11) aufweist.

3. Sammelbehälter nach Anspruch 1 oder 2, **dadurch gekennzeichnet,** daß die Transportflächen (10) der Räumarmabschnitte (12, 13) gegen die Radiallinie (16) um einen Winkel α geneigt sind, der zwischen 30° und 90°, vorzugsweise zwischen 60° und 65° liegt.

4. Sammelbehälter nach einem der vorangegangenen Ansprüche, **dadurch gekennzeichnet,** daß die Drehzahl des Räumers (6) 0,5 bis 50 Umdrehungen pro Minute, vorzugsweise 3 Umdrehungen pro Minute beträgt.

5. Sammelbehälter nach einem der vorangegangenen Ansprüche, **dadurch gekennzeichnet,** daß die Höhe der Transportfläche (10) ungefähr 10 mm beträgt.

## Claims

1. Storage tank with transport pump for the delivery of liquid media with production residue, e.g. shavings, coolants and lubricants, in which the storage tank (1) is constructed as a cylindrical pot and a scraper (6) rotating about the vertical storage tank axis (8) and having at least one scraper arm (7), which concentrates the shavings located on the substantially planar tank bottom on a circular line around the centre of the tank bottom (5) and supplies same to the transport pump, characterized in that the transport pump (4) projects into the storage tank (1) and sucks upwards the shavings away from the tank bottom (5), and the scraper arm (7) rests on the tank bottom and has an inner scraper arm portion (12) with a convex transport surface and an outer scraper arm portion (13) with a concave transport surface.

2. Storage tank according to claim 1, characterized in that the scraper arm (7) has a radially directed collecting portion (11) between the inner scraper arm portion (12) and the outer scraper arm portion (13).

3. Storage tank according to claim 1 or 2, characterized in that the transport surfaces (10) of the scraper arm portions (12, 13) are inclined by an angle α against the radial line (16), which is between 30 and 90°, preferably between 60 and 65°.

4. Storage tank according to one of the preceding claims, characterized in that the speed of the scraper (6) is 0.5 to 50 revolutions per minute, preferably 3 r.p.m.

5. Storage tank according to one of the preceding claims, characterized in that the height of the transport surface (10) is approximately 10 mm.

## Revendications

1. Récipient collecteur avec pompe de transport de produits liquides présentant des résidus de production, tels que copeaux, produits réfrigérants et lubrifiants, le récipient collecteur (1) étant constitué d'une marmite cylindrique et d'une curette (6) rotative montée sur l'axe vertical (8) du récipient collecteur, laquelle curette comportant elle-même au moins un bras (7) qui concentre les copeaux se trouvant au fond du récipient, essentiellement plat, suivant une ligne circulaire autour du centre du fond du récipient (5), les dirigant ainsi en direction de la pompe de transport, **caractérisé en ce que** la pompe de transport (4) pénètre dans le récipient collecteur (1) et aspire vers le haut les copeaux se trouvant au fond du récipient (5), et que le bras de curette (7) est en contact avec le fond du récipient et présente un segment intérieur (12) à surface de transport convexe et un segment extérieur (13) à surface de transport concave.

2. Récipient collecteur suivant la revendication 1, **caractérisé en ce que** le bras de curette (7) présente, entre son segment intérieur (12) et son segment extérieur (13), un segment collecteur (11) de direction radiale.

3. Récipient collecteur suivant la revendication 1 ou 2, **caractérisé en ce que** les surfaces de transport (10) des segments (12, 13) sont inclinées, par rapport à la ligne radiale (16), d'un angle α de 30° à 90°, de préférence entre 60° et 65°.

4. Récipient collecteur suivant une des revendications précédentes, **caractérisé en ce que** la vitesse de rotation de la curette (6) s'élève entre 0,5 et 50 tours par minute, de préférence 3 tours par minute.

5. Récipient collecteur suivant une des revendications précédentes, **caractérisé en ce que** la hauteur de la surface de transport (10) est d'environ 10 mm.
